# EUROPEAN PATENT SPECIFICATION

(11) **EP 0 873 278 B1**
(45) Date of publication and mention of the grant of the patent: **31.07.2002**
(21) Application number: 96939410.5
(22) Date of filing: 12.11.1996
(51) Int. Cl.: C02F 1/74, B01F 3/04, B04C 5/08

(54) **Method for adding oxygen to water**
Prozess zur Sauerstoffanreicherung von Wasser
Procédé d'oxygenation de l'eau

(30) Priority: 13.11.1995 SE 9504011; 13.11.1995 SE 9504012
(43) Date of publication of application: 28.10.1998
(73) Proprietor: AB Ribea Engineering, 590 98 Edsbruk (SE)
(72) Inventor: PETTERSON, Bernt, S-594 00 Gamleby (SE); KULLBERG, Sten, S-583 32 Linköping (SE)
(74) Representative: Berglund, Erik Wilhelm
(86) International application number: PCT/SE96/01461
(87) International publication number: WO 97/18168

(56) References cited:
- CH-A- 505 652
- US-A- 3 862 041
- US-A- 4 511 474
- DERWENT'S ABSTRACT, No. 88-75893/11, Week 8811; & SU,A,1 327 926 (KHARK COMMUNAL CONS), 7 August 1987.

## Description

A major part of the pollutions that are present in waste water is constituted by organic material. In order to purify waste water from the organic material it is known with so called biological filter or biological rotors. At these the natures own ability to take care of organic material is used and decomposing is achieved by means of microorganisms. For instance biological rotors are used constituted by corrugated. plastic material constituting a large attachment area for the microorganisms. One half of the rotor is submerged in the water that is to be purified and the plastic surface and the microorganisms sitting on this are respectively and alternatingly brought in contact with the water containing organic material that is nutrient and the oxygen in the air, which is also needed. When sufficient growth has occurred the growing material come loose in skin like flakes falling off from the rotor and down into the water. The organic material has in this way been converted into a mudlike substance that can be filtered away giving a cleaner water. This biological purification however has the drawback that it is comparably demanding in machinery. The biological rotor surfaces or biological filter surfaces that are required are large and there is also a risk of siltation and overload.

In view of the above mentioned required great resources and costs required for biological purification there is a need of a less costly and more trouble free solution and the, invention has as its object to define such a solution. In accordance with the invention this is achieved by oxygenizing water with a hydro-cyclone that in its wider end has a tangential inlet and an axial outlet downwards and a more narrow pointed end with an additional opening turned upwards and that the water cyclone is driven in such a way that as a result of the high rotation speed of the water in the cyclone a sub-pressure is established in the cyclone so that this through its narrowing opening and central cavity, can suck in air that is mixed into the water.

In a further development of the invention air is introduced into the water that is fed to the cyclone by means of an ejector.

As water is fed through a cyclone a very forcefull and accelerated vortex is obtained giving a separation of the material fed through, that is water with possible pollutions in accordance with their specific weight. The heavier particles are thrown out and are delivered at one end together with a smaller amount of water while purified water is delivered in the other end and end up further out. In this way one can consequently consider to separate not only particles that are heavier than water from this but also particles or for instance drops of oil or drops of solvents from the water. Since however hydro-cyclones in order to function satisfactory must be made very carefully these will be comparably expensive and it is consequently not particularly close at hand to use hydro-cyclones in connection with for instance communal water cleaning plants. The ability of the cyclone to separate suspended particles from a fluid is not the only reason to use hydro-cyclones in connection with biological purification. The real reason why hydro-cyclones despite their comparatively high price may find use at biological purification is instead that inside hydro-cyclones is established a underpressure that induces a continuous sucking in of air that is solved in the water. The cyclone in other words adds oxygen to the water. Even a comparatively small cyclone will give an adding of oxygen corresponding to that of a very large biological rotor.

The importance of oxygenizing the water at biological purifying is in reality sufficient to make it less interesting if the used cyclone simultaneously remove pollutions from the water or not. The oxygenizing with cyclone is even more efficient than the feeding of air with a compressor or pump in the same way as for instance in an aquarium.

Since the device for oxygenizing constituted by a cyclone and a water pump can be made comparatively small and easily moveable it can be placed also at other locations than where one can use biological rotors and biological filters as for instance in water courses, lakes, dams and even recirculation devices for water in car washes. In this way it becomes possible to support the biological purifying in the nature for instance so that this takes place closer to the pollutions source. Temporary outlets and adding of nutrients from cultivated land respectively can be compensated close to the source and the lack of oxygen resulting in death of fish that easily follow at discharge of nutrient material can be avoided.

For instance a pump with motor and cyclone can be arranged in a small raft. The raft can even be anchored in such a way that it by the sucking in and blowing out respectively of the water is driven around in a circle thereby enabling oxygenizing efficiently large surfaces with unmoving water. With a suitable dimensioning of the cyclone a comparative small pump effect can be used.

At the washing of cars in car wash facilities the resulting amount of pollutions is so great that it may disturb or even entirely knock out for instance biological purifying processes at communal waste treatment plants. In order to remedy this one has tried to recirculate the water at car washes, however this has had the drawback with bad smell, which is not only disturbing to the personal but also to the customers. Furthermore repeated changes of filter has been required.

In view of the above problem the invention has in a further development as its object primarily to reduce the delivering of pollutions and smell at car washes and secondly to make the purifying more efficient.

In accordance with the invention the above problem is solved by oxygenizing the water in the car wash facility with a cyclone and the water is recirculated and reused.

If so desired the oxygenizing cyclone may be used simultaneously to achieve several different types of cleaning at the same time. In addition to the oxygenizing the cyclone may in a known manner be used to separate heavy non organic particles (for instance sand particles), and this may be done even if the cyclone has its point turned upwards. The upwards delivered heavy material (that is delivered together with a smaller amount of water) may be collected and forwarded to a sedimentation tank. The water delivered downwards contains solved and finely divided air that is pressed downwards in the tank by the pressure and the speed of the outrushing water. Since a surplus of air exist in the water air bubbles result, that when they rise towards the surface pull light and/or small pollutions with them up to the surface were a dirty foam is obtained and removed (flotation), for instance to the same sedimentation tank as the heavier pollutions.

Although the use of cyclones does not result in the normally desired sharp separation in pollutions and clean water respectively, that is a very small volume of pollutions they may together with a sedimentation tank function so that in the water system of the car wash a separating cleaning step is achieved between one part with particle polluted water and one with water that may be used for washing. The particle pollutions need thus not continuously to be removed from the system but are all the time forced to remain in a polluted part (the sedimentation tank) while the purified water in particular cleaned from scratching particles may be fed to the washing process, preferably via a buffer reservoir. The purifying can in this way be made much more efficient by restricting the cyclone package only to take out a very small amount of water cleaned from particles that is transferred to the wash water reservoir. Even lighter particles may for instance with the above described flotation by means of a cyclone continuously be transferred to the sedimentation tank that then may be emptied of pollutions when so is required. The water of the sedimentation tank may continuously be tapped from a location where the water has become clear by pollutions having floated up and sunk down respectively. Since the biologically decomposable material is collected in the sedimentation tank it is also here that the oxygen consuming decomposing essentially takes place.

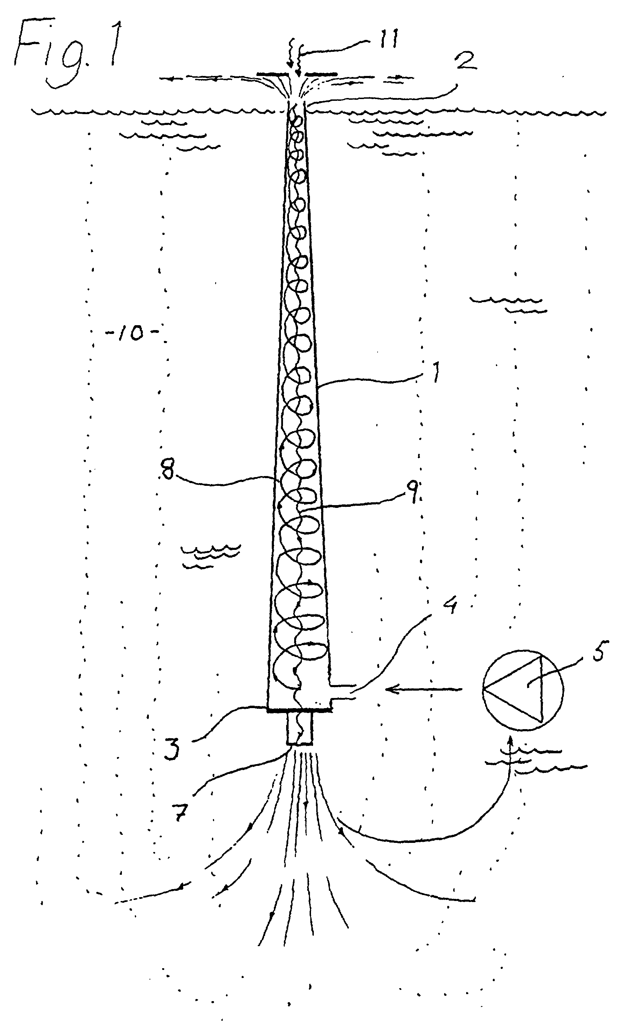

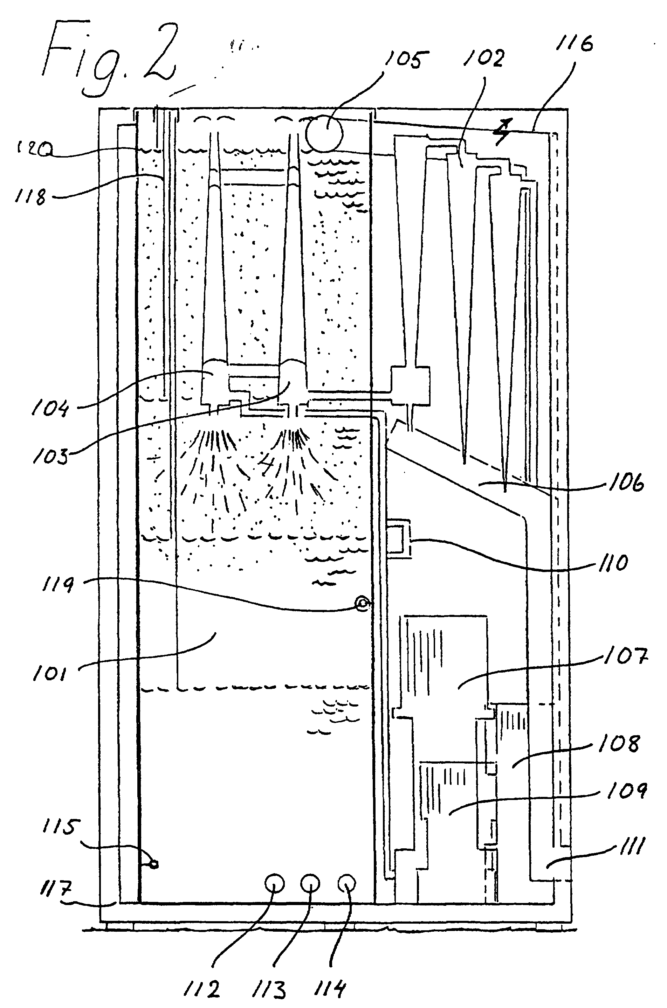

Additional advantages and characteristics of the invention are apparent from the patent claims and the following description of the invented principle in connection with fig 1 and the preferable embodiment shown in fig 2.

The hydro-cyclone shown in fig 1 in accordance with the invention is placed in water 10 and includes a cyclone 1 that has its narrow end 2 turned upwards and above the water surface and its wider end 3 with the inlet 4 turned downwards and submerged in water. The inlet 4 is arranged tangentially and in the bottom of the cyclone a central outlet 7 is arranged. To the cyclone inlet 4 water comes from a pump 5 that in turn is driven by a motor. The motor may be electric or be constituted by a petrol engine, wind motor or be driven in some other way.

At use the shown device operates so that water is sucked in by the pump 5 and fed further to the cyclone 1 where the water due to the feed velocity and direction is thrown around in spiral with an upwards increasing number of revolutions per minute due to the reduction of the radius. Possible heavy particles are thrown out and follow the wall of the cyclone upwards. Due to the high rotational speed for the water in the cyclone a downwards directed central cavity 9 is formed from the upper tip of the cyclone and air 11 is sucked in this way and mixes with the water. In addition to a small part of the water being pressed out through the upper end of the cyclone in a more or less shower like way together with heavier particles the major part of the water (80%) is pressed out downward through the central lower outlet of the cyclone. The water that is pressed out through the lower outlet will also bring along the air that has been mixed with the water at the whirling in the cyclone. The mixing or dispersing is so good that an efficient oxygenizing is obtained. The water is even saturated with oxygen. The surplus air will form bubbles that when they rise up towards the water surface bring small and light pollutions along up to the surface (flotation). A splash or hit panel 12 is arranged around the pointed end of the cyclone.

The purification unit shown in fig 2 is devised and dimensioned for a car wash. The unit is rectangular and has a width or length of 120 cm, a depth of 65 cm and a height of 210 cm. Slightly more than half of the space is taken by a storage tank 101 of 600 l for the water that is used to wash cars with. The water outlet 112 to the car wash is arranged in the lower end of the tank and connected to a pump 108.

In the lower end of the tank is also arranged an outlet 113 which lead to a pump 107 which delivers water to a cyclone 104 arranged in the tank 101. The cyclone 104 is turned so that the pointed end is turned upwards and the broader end of the cyclone is turned downwards in the way that is shown in fig 1. The inclination of the walls of the cyclone upwards, the height of the cyclone and the injection speed of the water feed to the cyclone respectively are chosen in such a way that the major part of the water from the cyclone is delivered in the lower end and air is sucked in through the upper end of the cyclone.

The cyclone thus sucks air down into the water in the tank and achieves an oxygenizing of this. The oxygenizing of the water does not only provide the possibility to aerobe decomposing and a preventing of badly smelling anaerobic processes but also air bubbles will form on possible pollutions in the water and pull these up in the water tank to the upper end of this were a flotation outlet 105 is arranged. Not only water flows through this outlet but also the foam that has been formed by the oxygenizing and pollutions brought along. The outlet goes to a sludge tank or combined sedimentation and oil separation tank that is placed somewhere else. Such tanks are often already present and are intended for separation of oil, sand and mud from the waste water that result at the filling station.

The water in the storage tank 101 is by a pump 109 pumped to a set 102 of purifying cyclones. These are arranged with the tip downwards and are coupled in series. The two first ones are of the type that include a thin tip downwards were the pollutions together with a smaller amount of water exit while the major part of the water comes out purified centrally upwards from the cyclone. The third cyclone however lacks central outlet in the upper and wider end. Instead the purified water is taken out through a broadening of the cyclone shortly above its pointed lower end. In this way lighter particles will be separated from the water that from this cyclone is fed to an oxygenizing cyclone arranged in the purifying or clearing tank 101. The pollutions extracted from the water by the cyclone unit 102, heavier as well as lighter, are collected in a sloping channel 106 that transfers into an outlet 111 and comes back to the sedimentation tank.

In the tank is further at 119 arranged a fresh water inlet that can be used for the filling of water in case the water level in the system as a whole should fall. In the vicinity of the bottom 117 of the tank 101 is further arranged a conductivity sensor 115 that is used to measure the amount of salt in the water. At frequent salting in wintertime cars can be coated with comparatively much salt that of course ends up in the water in the car washes. This salt is from an environmental angle not dangerous, but for the washing function too large concentrations are undesired and when a too high salt percentage is measured water is via the outlet 114 taped to the communal waste water net. The water that is taped in this way may then be replaced by fresh water via the inlet 119. It deserves to be mentioned that the water that is tapped at this is the maximally purified water in the facility, why the load on the communal waste water net will be minimal from a purification angle.

With 116 an electrical control unit for the purification facility is denoted, 118 is a level sensor arranged for monitoring the water level in the storage tank 101. The uppermost level 120 corresponds to a maximally filled tank, water overflow being possible via the outlet 105 to the sedimentation tank: This level is not continuously necessary but required with a certain regularity to allow the pollutions carried with the foam (flotation) to be removed together with freshly oxygenized water to the aerobic decomposing in the sedimentation tank.

At a suitable level, for instance in level with the lower ends of the oxygenizing cyclones 103 and 104 or a short distance below this the adding of water from the sedimentation tank is initiated. If the level falls further, or if the level in the entire system falls, fresh tap water must be added via the inlet 119.

At 110 is arranged an ejector unit that can be used to suck air into water that is taken out from the tank and repumped to this via an ejector, this in order to enhance the flotation effect when needed by increasing the amount of rising bubbles in the tank 101. With the same purpose the water to which has been added air by means of an ejector my be fed to one of the cyclones.

The hydro-cyclones 103 and 104 in accordance with the invention may have inlets openings with a diameter of approximately 18 mm or slightly less. A length (height) of 70 - 80 cm and an inclination of 4,5° for the sides, that is a point angle for the conical surface of 9°. The cyclone is then fed with a pressure of 1 kg/cm² (100 kPa) or more. At these conditions the outlet pressure of the water through the lower outlet will be sufficient to push the water out this way and down a distance into the tank securing circulation in the water volume. An increased feed pressure give in particular an increased outlet feed speed downwards with continuous oxygenizing of the water with in the upper end drawn in air.

The cyclones 103 and 104 need not be connected in the way that is shown in the drawing but can for instance be coupled via connecting hoses that run over the upper edge of the tank, this in order to make it easier to lift them out at control and service. One can also consider to arrange these two cyclones outside the tank but with connections for the lower ends into the tank and with the upper ends protruding over a collecting tray or the like from which the water may flow to the tank 101 or directly to the outlet 105 and the sedimentation tank, this since these cyclones, that in themselves have as essential object to oxygenize the water also purifies this, the water in the upper end may therefore be somewhat less clean than that emerging in the lower end.

As is apparent from the above examples the oxygenizing cyclones in accordance with the invention provide a possibility not only for the prevention of bad smell due to anaerobic decomposing but this may be instead be exchanged for aerobic decomposing that may not only take place in the sedimentation tank but also in the storage tank. As is apparent from the above example the invention thus enables efficient aerobic biological decomposing or purification even in very compact facilities.

One need of course not be satisfied with an exclusive use of oxygenizing cyclones in small facilities but these may also be used for oxygenizing of waste water for larger purification basins. At this it is possible to consider the arrangement of several cyclones located over the surface of the basin. Also here the cyclones improve the flow in the basin and the water feed to the cyclones may be constituted by the fed water that is to be purified. Preferably the cyclones may be arranged with floating bodies so that they independent of the water level are on the same depth and have the same working conditions.

## Claims

1. Method for the oxygenizing of water, **characterized in that** it includes a hydrocyclone (1) that in its wider end (3) has a tangential inlet (4) and an axial outlet (7) downwards and a more narrow pointed end (2) with an additional opening turned upwards and that the water cyclone is driven in such a way that as a result of the high rotation speed of the water in the cyclone a sub-pressure is established in the cyclone so that this through its narrowing opening and central cavity, can suck in air (11) that is mixed into the water.

2. Method according to claim 1, **characterized in that** air is introduced into the water that is fed to the cyclone by means of an ejector (110).

## Patentansprüche

1. Verfahren zur Sauerstoffanreicherung von Wasser, **dadurch gekennzeichnet, daß** es einen Hydrozyklon (1) umfaßt, welcher an seinem breiteren Ende (3) einen tangentialen Einlaß (4) und einen axialen Auslaß (7) abwärts, und ein schmaleres, spitzes Ende (2) mit einer zusätzlichen, nach oben gerichteten Öffnung hat, und daß der Hydrozyklon derart betrieben wird, daß infolge einer hohen Drehgeschwindigkeit des Wassers im Zyklon ein Unterdruck im Zyklon aufgebaut wird, so daß dieser über die sich verengende Öffnung und den zentralen Hohlraum Luft (11) ansaugen kann, welche in das Wasser eingemischt werden kann.

2. Verfahren nach Anspruch 1, **dadurch gekennzeichnet, daß** Luft in das Wasser eingebracht wird, welches dem Zyklon mittels eines Ejektors (110) zugeführt wird.

## Revendications

1. Procédé d'oxygénation de l'eau, **caractérisé en ce qu'**il comprend un hydrocyclone (1) qui, dans son extrémité large (3), a une admission tangentielle (4) et une sortie axiale (7) vers le bas et une extrémité effilée étroite (2) avec une ouverture supplémentaire tournée vers le haut et **en ce que** le cyclone d'eau est entraîné de manière telle que, résultant de la vitesse de rotation élevée de l'eau dans le cyclone, une sous-pression est établie dans le cyclone si bien que celui-ci grâce à son ouverture à rétrécissement et à sa cavité centrale, peut aspirer l'air (11) qui est mélangé à l'eau.

2. Procédé selon la revendication 1, **caractérisé en ce que** de l'air est introduit dans l'eau qui est amenée au cyclone au moyen d'une pompe à éjecteur (110).
